# EUROPEAN PATENT SPECIFICATION

(11) **EP 4 179 370 B1**
(45) Date of publication and mention of the grant of the patent: **02.09.2026**
(21) Application number: 21739692.8
(22) Date of filing: 06.07.2021
(51) Int. Cl.: G02B 6/44

(54) **TELECOMMUNICATIONS ARRANGEMENTS**
TELEKOMMUNIKATIONSANORDNUNGEN
AGENCEMENTS DE TÉLÉCOMMUNICATION

(30) Priority: 09.07.2020 US 202063049969 P; 15.10.2020 US 202063092220 P
(43) Date of publication of application: 17.05.2023
(73) Proprietor: Commscope Connectivy Belgium BV, 3010 Kessel-Lo (BE)
(72) Inventor: VAN BAELEN, David Jan Irma, Hickory, North Carolina 28602 (US); PARTON, Geert Antoon, Hickory, North Carolina 28602 (US); BLEUS, Heidi, Hickory, North Carolina 28602 (US); VRANKEN, Wouter, Hickory, North Carolina 28602 (US); FISCHER, Kurt Thomas, Hickory, North Carolina 28602 (US)
(74) Representative: Murgitroyd & Company
(86) International application number: PCT/EP2021/068719
(87) International publication number: WO 2022/008546

(56) References cited:
- US-A1- 2008 085 093
- US-A1- 2008 219 633
- US-A1- 2017 363 831
- US-A1- 2020 124 803
- US-A1- 2020 183 116

## Description

### Cross-Reference to Related Applications

This application claims the benefit of U.S. Patent Application Serial No. 63/049,969, filed on July 9, 2020, and claims the benefit of U.S. Patent Application Serial No. 63/092,220, filed on October 15, 2020.

### Background

Communication systems utilize fiber optic cables to connect together pieces of telecommunications equipment. Telecommunications panels are used to optically couple fiber optic cables to cross-connect between various types of communications equipment. The demand for added capacity is growing rapidly. This demand is being met in part by the increasing use and density of fiber optic transmission equipment. Even though fiber optic transmission equipment permits higher levels of transmission in the same or smaller footprint than traditional copper transmission equipment, the demand requires even higher levels of fiber density. In environments of higher fiber density, access, cleaning, and repair all can pose challenges.

Publication US 2008/085093 Al discloses a cable management panel for telecommunications applications. The device comprises a chassis and a drawer slidably mounted to the chassis so as to be movable between an open position and a closed position. The drawer includes a drawer frame and a tray on which cable management devices are mounted, the tray being pivotally connected to the drawer frame such that access to the cable management devices is provided by sliding the drawer to the open position and pivoting the tray relative to the drawer frame from a planar orientation to a non-planar orientation.

Further development in such higher density fiber systems is desired.

### Summary

The invention provides a rack-mountable telecommunications fixture according to independent claim 1. Further embodiments are provided by the dependent claims.

### Brief Description of the Drawings

FIG. 1 is a top perspective view of an example telecommunications pivot tray having features that are examples of inventive aspects in accordance with the present disclosure;
FIG. 2 illustrates the pivot tray of FIG. 1 with the adapters, the fiber optic splitter, and the cover for the splitter removed from the tray;
FIG. 3 illustrates a right side perspective view of an example telecommunications fixture in the form of a fiber optic distribution element that defines a pull-out drawer, the fiber optic distribution element including a pair of the pivot trays of FIG. 1 mounted therein;
FIG. 4 is a top perspective view of the fiber optic distribution element of FIG. 3 illustrating some example cable routing within one of the trays;
FIG. 5 is a top perspective view of an example telecommunications pivot tray having features that are examples of inventive aspects in accordance with the present disclosure, the pivot tray having features similar to that of FIG. 1;
FIG. 6 is a top perspective view of an example telecommunications pivot tray similar to that shown in FIG. 5, except the fiber optic splitter and the connection locations for leading cabling to and from the splitter are provided in a removable module, the pivot tray illustrated as a left-input tray where the cabling is input and output from the left side of the pivot tray;
FIG. 7 illustrates a telecommunications pivot tray having features that are similar to the tray shown in FIG. 6, except for being provided as a right-input tray;
FIG. 8 is a top perspective view of another example telecommunications pivot tray having features that are examples of inventive aspects in accordance with the present disclosure, the tray housing a removable module and the signal input being provided from the back side of the tray;
FIG. 9 is a top perspective view of another example telecommunications pivot tray having features similar to that of FIG. 8, except that the signal input for the module is provided from the front side of the tray;
FIG. 10 illustrates a right side perspective view of an example fiber optic distribution element, not forming part of the claimed invention, that defines a pull-out drawer, the fiber optic distribution element directly housing a single removable telecommunications module instead of pivot trays as in previous examples;
FIG. 11 is a left side perspective view of the fiber optic distribution element of FIG. 10;
FIG. 12 is a top perspective view of the fiber optic distribution element of FIG. 10;
FIG. 13 illustrates the removable module of the element of FIGS. 10-12 in isolation;
FIG. 14 is a top perspective view of another example telecommunications pivot tray having features that are examples of inventive aspects in accordance with the present disclosure, the tray housing a removable module;
FIG. 15 illustrates the removable module of FIG. 14 in an exploded configuration with respect to the pivot tray;
FIG. 16 illustrates the removable module of the tray of FIG. 14 in isolation;
FIG. 17 is a top perspective view of yet another example telecommunications pivot tray, not forming part of the claimed invention;
FIG. 18 illustrates the pivot tray of FIG. 17 with the cover for the splitter removed from the tray to show in the internal details of the tray;
FIG. 19 illustrates a right side perspective view of an example telecommunications fixture in the form of a fiber optic distribution element that defines a pull-out drawer, the fiber optic distribution element including a pair of the pivot trays having features that are examples of inventive aspects according to the present disclosure, one of the pivot trays shown in a pivoted configuration;
FIG. 20 illustrates one of the pivot trays of FIG. 19, where a telecommunications module housed therein is shown without a cover to illustrate the internal features;
FIG. 21 illustrates the pivot tray of FIG. 20 in isolation without the telecommunications module;
FIG. 22 illustrates one of the telecommunications modules housed in the pivot trays of FIG. 19 in isolation;
FIG. 23 is a main body portion of the telecommunications module of FIG. 22 with the adapter packs and the fiber optic splitters removed therefrom;
FIG. 24 shows the cover of the telecommunications module of FIG. 22;
FIG. 25 is a partial view illustrating one of the telecommunications modules and trays of FIG. 19, where the telecommunications module is in a flat position within the tray;
FIG. 26 illustrates the telecommunications module of FIG. 25 in a pivoted state relative to the tray;
FIG. 27 is another view illustrating the telecommunications module of FIG. 25 in a flat position within the tray;
FIG. 28 is another view illustrating the telecommunications module of FIG. 26 in a pivoted state;
FIG. 29 is another view illustrating the telecommunications module of FIG. 27 in a flat position from an opposite side of the tray;
FIG. 30 shows a close-up view of the telecommunications module of FIG. 29 in a pivoted state to illustrate the details of the pivot-enabling and pivot-limiting features of the module;
FIG. 31 is a close-up view of the flexible cantilever arm of the telecommunications module of FIGS. 25-30 that allows latching and unlatching of the module for pivot motion;
FIG. 32 is a perspective view of one of the pivot trays of the distribution element of FIG. 19, wherein the telecommunications module is shown in a pivoted state;
FIG. 33 illustrates the abutment features of the telecommunications module of FIG. 22 that are configured to prevent closure of the drawer of the distribution element when the module is in a lifted position;
FIG. 34 diagrammatically illustrates one example system utilizing the fiber optic distribution element of FIG. 19, the system utilizing an additional fiber optic splitter that is mounted to an exterior wall of the distribution element in addition to the internal splitters within the modules of the pivot trays; and
FIG. 35 illustrates the example system of FIG. 34 with the input signal on the right side of the distribution element, as opposed to the left side as shown in the system of FIG. 34.

### Detailed Description

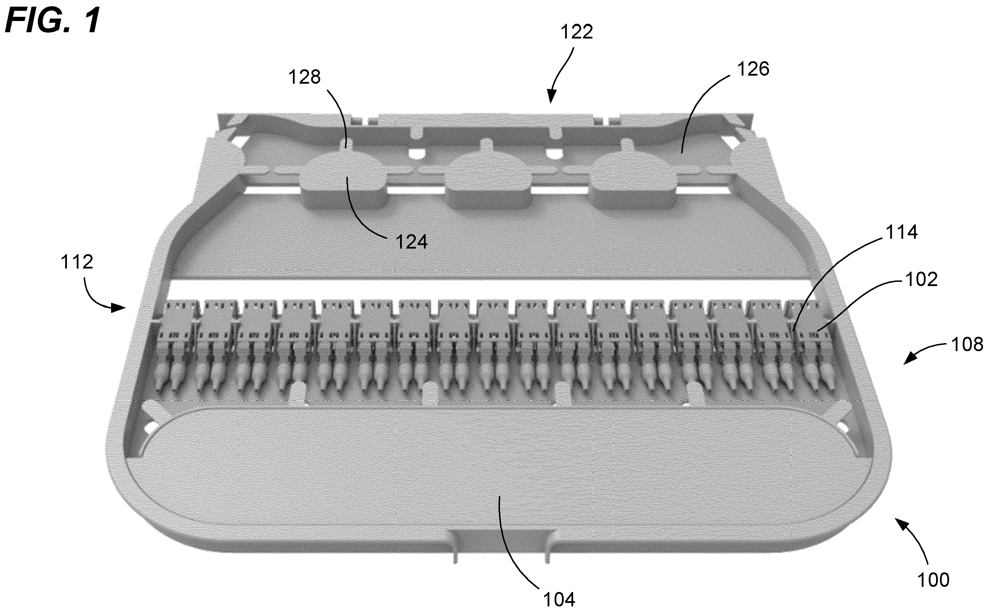

Referring now to FIGS. 1-18, certain examples of telecommunications equipment in the form of pivot trays that are mounted in telecommunications fixtures such as ones including pull-out drawers are illustrated. In certain examples, the telecommunications trays are flip-trays that pivot relative to the drawers for access. In certain other examples, multiple trays may be stacked on top of each other within a single pull-out drawer.

As will be discussed in further detail, in certain examples, each pivot tray comprises a removably mounted telecommunications module. The module may define a body that is enclosed by a cover to define an interior arear. Within the interior area, the module includes optical equipment such as a fiber optic splitter for power-splitting an incoming signal into a plurality of output signals, the output signals being the same signal as the split input signal. The telecommunications module may include radius limiters within the interior arear for managing cables. The module may define connection locations for inputting the input signals and outputting the output signals via cables. As will be described in further detail, in certain examples, the connection locations may be defined by fiber optic adapters that are mounted (e.g., removably) to the module for relaying the input and output signals through connectors that are terminated to the cables coming in and going out of the telecommunications module.

It should be noted that in certain illustrated examples of the present disclosure, the tray may include the above-noted features integrally built into the tray without the use of removable modules, where features such as the adapter holders, radius limiters, and splitter holders may be integrally formed or molded into the tray.

And, as will be discussed, in certain examples, the telecommunications fixtures such as ones including the pull-out drawers may include removable modules for processing or power-splitting incoming signals into output signals without necessarily using pivot trays to support such modules. In such examples, the removable modules may be directly housed within the pull-out drawers.

In general, telecommunications fixtures in the form of fiber distribution elements that house the above-noted flip trays may be configured for receiving one or more input cables (carrying an input signal) entering one side of the element, power-splitting the input signal into a plurality of output signals (output signals being the same signal as the input signals), and outputting the output signals via cabling from either the same side of the element or an opposite side of the element, depending upon the layout of the element or the pivot trays within the element. As noted above, such elements carrying the pivot trays include pull-out drawers, where the pull-out drawers may be slidably mounted in a stacked arrangement to telecommunications frames and are configured for slidable movement between a closed position and an open access position

Examples of such slidable distribution elements that can support the trays discussed herein are described in PCT Publication Nos. WO 2014/118227; WO 2014/207210; and WO 2016/012550.

As noted above, certain examples of pivot trays that are discussed with respect to FIGS. 1-18 include telecommunications modules that provide the fiber distribution or signal-splitting function. As will be discussed, in certain examples, such modules are provided in a removable fashion with respect to the trays. In other examples, such modules or certain features of the modules may be are integrally formed with or otherwise non-removably mounted to the pivot trays.

Referring now to FIGS. 1-4, one example of a pivot tray 100 having features that are examples of inventive aspects in accordance with the present disclosure is illustrated.

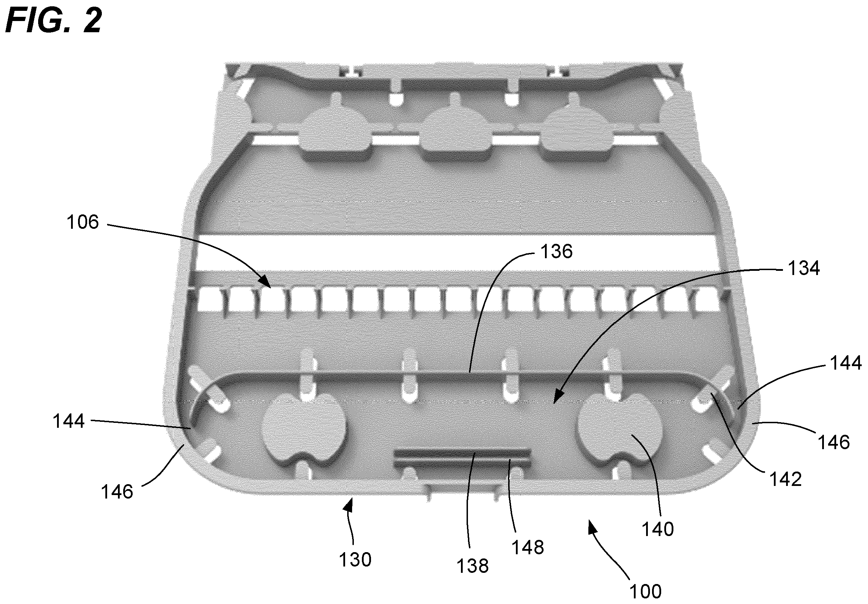

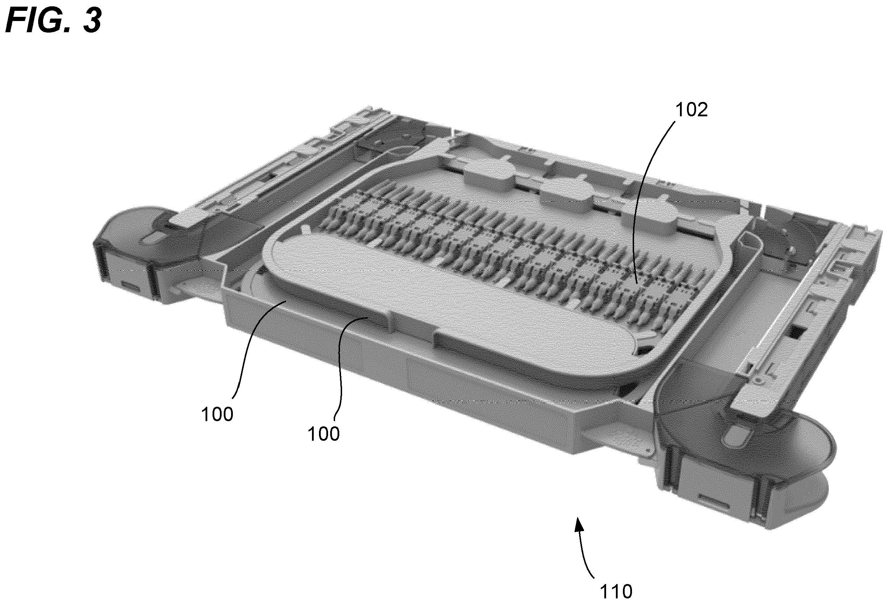

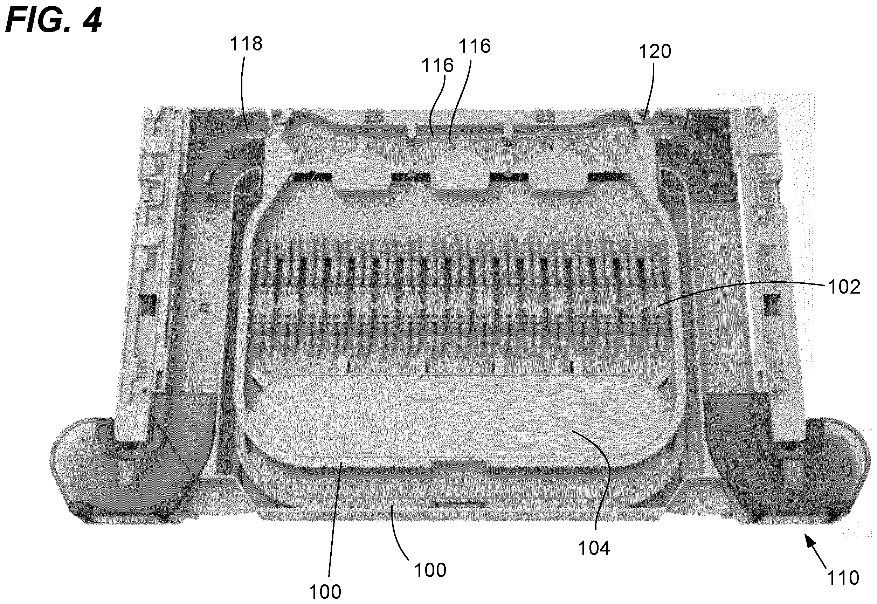

In FIG. 1, the pivot tray 100 is shown in isolation and is populated with fiber optic adapters 102 that define connection locations for the tray 100. FIG. 2 illustrates the pivot tray 100 of FIG. 1 in an empty configuration with the adapters 102 and a cover 104 for a splitter removed from the tray 100. FIG. 3 illustrates a right side perspective view of an example telecommunications fixture in the form of a fiber optic distribution element 110 that defines a pull-out drawer, the fiber optic distribution element 110 including a pair of the pivot trays 100 mounted therein. FIG. 4 is a top perspective view of the fiber optic distribution element 110 of FIG. 3 illustrating some example cable routings within one of the trays 100.

Referring back to FIGS. 1 and 2, the flip tray 100 defines a plurality of adapter mounts 106 that extend from a right side 108 to a left side 112 of the tray 100. The adapter mounts 106 define walls 114 for receiving the spring clips and opposing flanges of the adapters 102, as generally known in the art. In the illustrated example, the flip tray 100 is shown to be populated with seventeen duplex LC adapters 102 for connecting a total of thirty-four individual signal-carrying cables 116 (e.g., 900-micron or 250-micron fiber optic cabling according to certain examples, depending upon the need). It should be noted that in the illustrated example of the tray 100, one of the duplex adapters 102 is used as a signal input location (where only one of the ports of the duplex adapter 102 may be used) and the remainder of the duplex adapters 102 are used as the signal output location. The remaining thirty-two ports allow the flip tray 100 to house a 1x32 fiber optic splitter, where an incoming signal may be split into thirty-two output signals for leading to customers. The duplex configuration of the input adapter 102 provides some flexibility for the input side, allowing different configurations and numbers of splitters to be housed within the flip tray 100. For example, the two ports of a duplex adapter 102 can be used to input two signals that lead to two separate splitters within the tray 100 for providing two different sets of split signals. It should also be noted that, although the pivot trays and modules of the present application are described as housing equipment in the form of fiber optic splitters that power-split a given signal, the pivot trays may be used for housing other types of optical equipment such as Wavelength Division Multiplexers (WDM), filters, couplers, etc., depending on the distribution need.

Still referring to FIGS. 1 and 2, the pivot tray 100 defines a cable entry point 118 (e.g., input location) and a cable exit point 120 (e.g., output location) along a back side 122 of the tray 100. As shown in the example cable routing in FIG. 4, in the depicted pivot tray 100, the input and output locations 118, 120 may be provided at opposite sides of the tray 100. Radius limiters 124 in the form of spools are provided adjacent the back 122 for managing cables 116 coming in and going out of the tray 100. A cable path 126 may be provided with cable management fingers 128 for retaining the cables 116 within the tray 100 as the cables 116 is routed therein.

In the illustrated example, the location of the fiber optic splitter may be toward a front side 130 of the tray 100. The cover 104 encloses a splitter area 134 that is separated from the adapter mounts 106 via a wall 136 that extends along a majority of the length from the right side 108 to the left side 112 of the flip tray 100. The splitter may be mounted within a splitter mount 138 within the splitter area 134. The splitter mount 138 is flanked by two radius limiters 140 in the form of spools for managing or spooling any slack cable within the splitter area 134. Once again, cable management fingers 142 are provided so as to extend outwardly and inwardly from the wall 136 for retaining cables 116 against the wall 136.

It should be noted that cable entry/exit point(s) 144 to the splitter area 134 may include a feature for providing a frictional hold on the incoming and outgoing cables 116 to prevent movement of the cables 116 if the adapters 102 on the outside of the splitter area 134 are being accessed or moved for cleaning. The feature for providing the frictional hold may be a peigne feature that is provided at the cable entry/exit points between edges of the wall 136 and sidewalls 146 of the tray 100 at these points.

The splitter mount 138 may be provided as a friction clamp defined by a pair of parallel walls 148. Other configurations are possible for the splitter mount 138. Adhesive or epoxy may be used for retaining the splitter within the splitter mount 138.

Referring now to FIGS. 3 and 4 specifically, as noted above, FIG. 3 illustrates a right side perspective view of an example telecommunications fixture in the form of a fiber optic distribution element 110 that defines a pull-out drawer, the fiber optic distribution element 110 including a pair of the pivot trays 100 mounted therein. And, FIG. 4 is a top perspective view of the fiber optic distribution element 110 illustrating some example cable routings within one of the trays 100 that is provided in a stacked arrangement within the distribution element 110.

As noted above, examples of such slidable distribution elements 110 that support the trays discussed herein, including the movement and functionality of the distribution elements 110, are described in PCT Publication Nos. WO 2014/118227; WO 2014/207210; and WO 2016/012550.

Even though the distribution element 110 is illustrated in FIG. 4 as providing the input signal from the left side 112 of the trays 100 and outputting the output signals from the right side 108 of the trays 100, such an example distribution element 110 and pivot tray arrangement is configured to allow the same tray 100 to be used for both left and right orientation, where the duplex adapters 102 at either side of the tray 100 may be used as the input adapters 102.

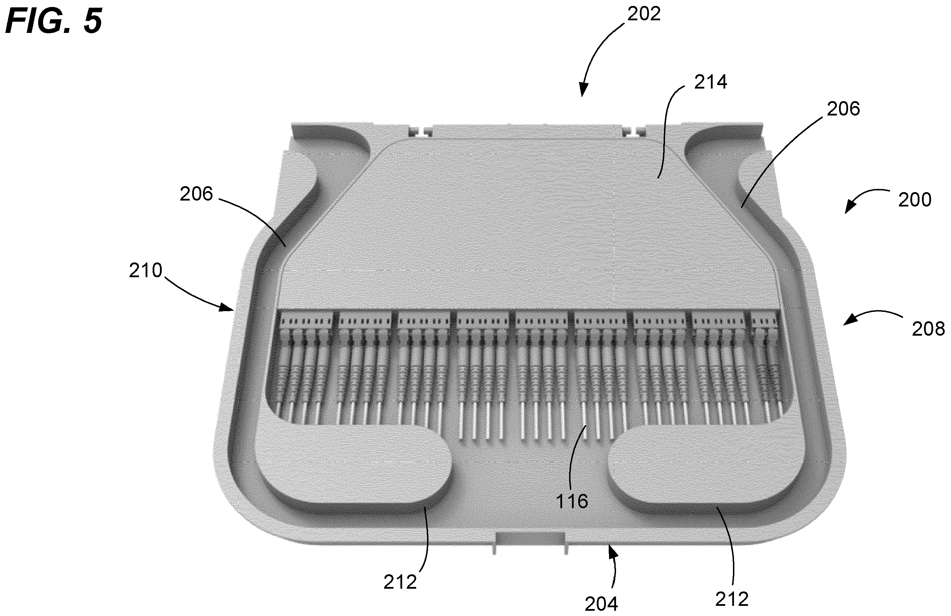

FIG. 5 illustrates another example of a telecommunications pivot tray 200 having features that are examples of inventive aspects in accordance with the present disclosure, the pivot tray 200 having features similar to the tray 100 of FIGS. 1-4.

The pivot tray 200 illustrated in FIG. 5 is, again, configured to allow the input signal carrying cables 116 to enter the tray 200 from either side of the tray 200, adjacent a back side 202 of the tray 200. However, in contrast to the pivot tray 100 shown in FIGS. 1-4, the cables 116 can be guided all the way toward a front 204 of the tray 200, and the patching can occur toward the front side 204 of the tray 200.

As shown, cable channels 206 are provided on both right and left sides 208, 210 of the tray 200 with radius limiting walls 212 guiding cables 116 toward and also away from the connection locations that are once again defined by fiber optic adapters 102. In the depicted example, the right-most duplex adapter 102 is being used as the input adapter 102 and the remainder of the output adapters 102 are provided as quad adapter blocks 103, rather than duplex adapters. The splitter is once again provided with a cover 214 to retain the cabling within the splitter area.

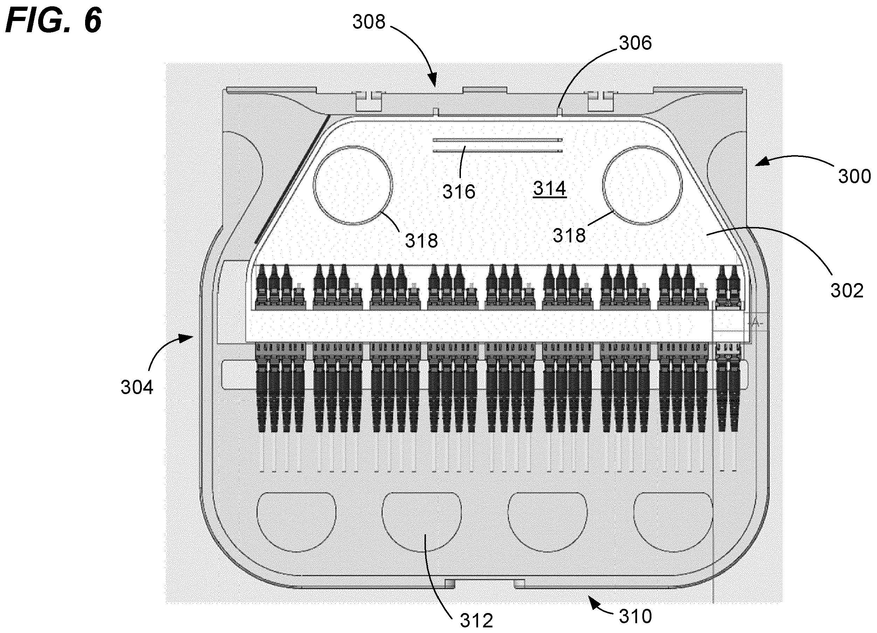

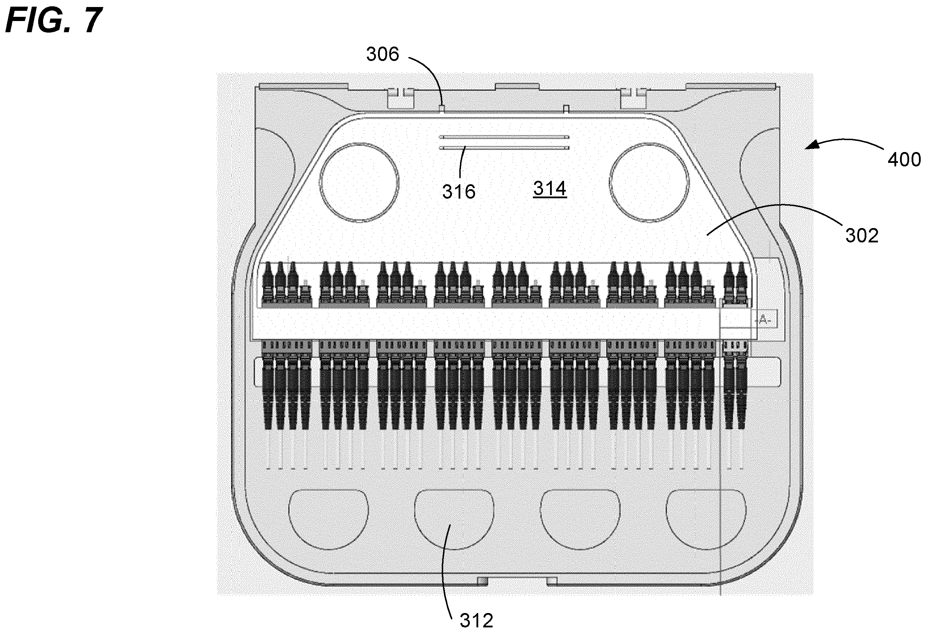

Referring now to FIG. 6, another example of a telecommunications pivot tray 300 similar to that shown in FIG. 5 is illustrated, except that the fiber optic splitter and the connection locations for leading to and from the splitter are provided in the form of a removable module 302. The depicted example of the pivot tray 300 is illustrated as a left-input tray 300 where the cables 116 are input and output from a left side 304 of the pivot tray 300. FIG. 7 illustrates a telecommunications pivot tray 400 having features that are similar to the tray 300 shown in FIG. 6, except for being provided as a right-input tray 400.

The module 302 that is removably housed within the pivot trays 300, 400 shown in FIGS. 6 and 7 provide some flexibility for accessing and cleaning the adapters 102 that are mounted to the module 302. In certain examples, the module 302 is pivotally mounted via a hinge 306 toward a back 308 of the trays 300, 400 such that the module 302 is tilted up from a front 310 of the pivot trays 300, 400 for easier access to the adapters 102 and connectors 101 mounted on the module 302.

It should be noted that, for eye-safety reasons, since the module 302 is tilted upwardly at the front 310 of the pivot trays, the adapters 102 provided therein may include shutters to minimize or prevent any damage to a user looking directly into the ports.

In the examples of the pivot trays 300, 400 shown in FIGS. 6 and 7, the trays 300, 400 include radius limiters 312 in the form of spools toward the front side 310 of the trays 300, 400 for managing cables 116 coming in and going out of the trays 300, 400. Once again, within a splitter area 314 of the module 302, a splitter mount 316 may be flanked by two radius limiters 318 for providing flexibility in cable spooling and management.

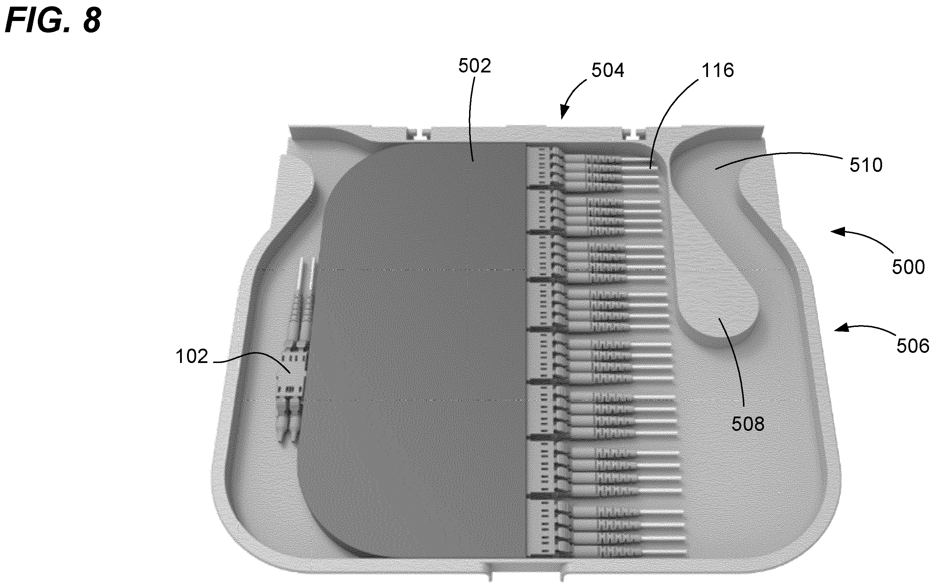

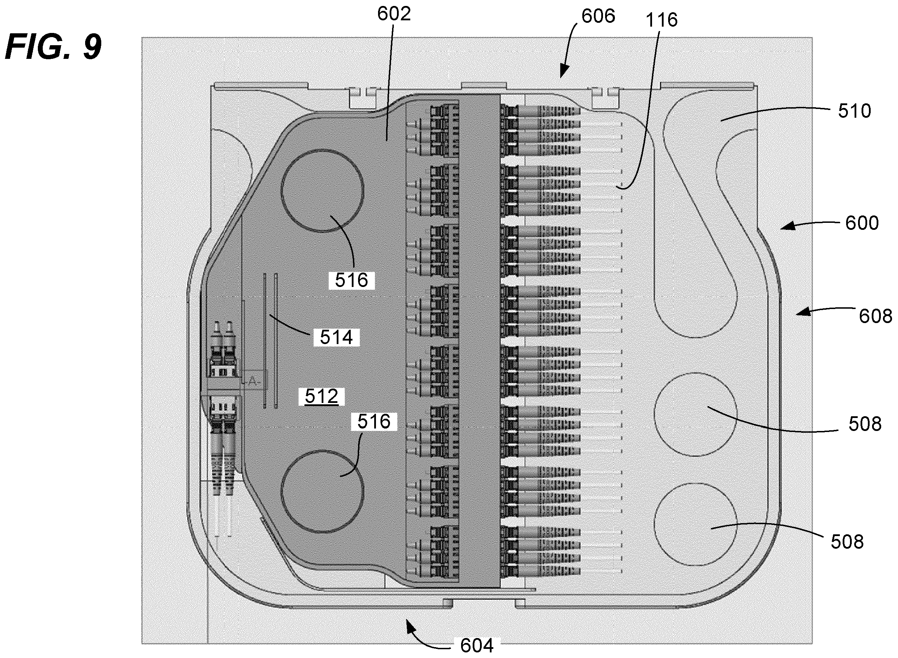

Referring now to FIGS. 8 and 9, another two examples of pivot trays 500, 600, respectively, are illustrated that are similar in signal distribution function as the pivot trays described above. However, in the examples illustrated in FIGS. 8 and 9, the signal input locations are provided at a different location than the signal output locations, and furthermore, the signal output locations, once again defined by quad adapter blocks 103, are provided in a stack that extends front to back, rather than side to side, as in the previous examples. In the example of the pivot tray 500 illustrated in FIG. 8, the tray 500 houses a removable module 502 where the signal input location is provided from a back side 504 of the tray 500. In contrast, in the pivot tray 600 illustrated in FIG. 9, the signal input location for the removable module 602 therein is provided from a front side 604 of the tray 600. As depicted, in both pivot trays 500, 600 of FIGS. 8 and 9, the signal output locations are provided at the backs 504, 606 of the trays, on right sides 506, 608, where the cables 116 carrying the output signals are guided around one or more radius limiters 508 and exit through a cable channel 510. Once again, within a splitter area 512 of the modules 502, 602 for each of the trays 500, 600, a splitter mount 514 may be flanked by two radius limiters 516 for providing flexibility in cable spooling and management.

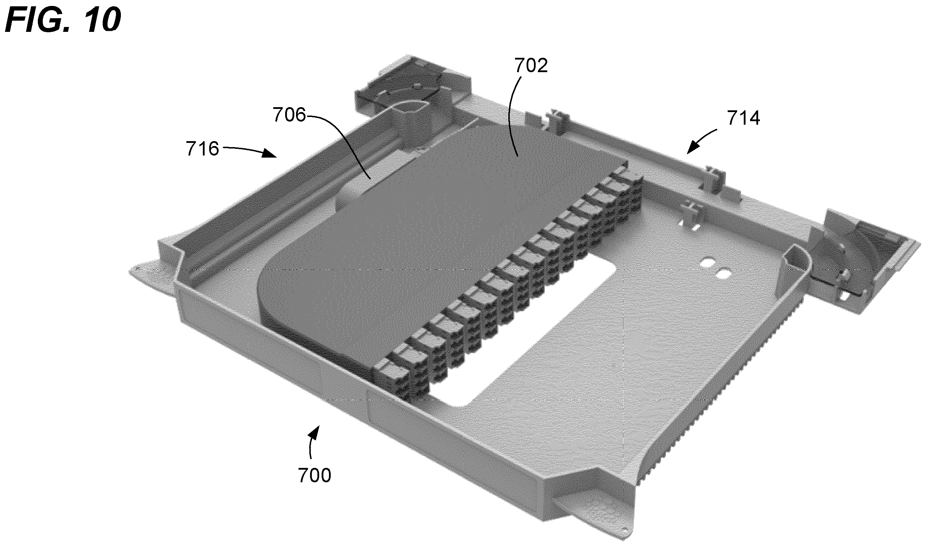

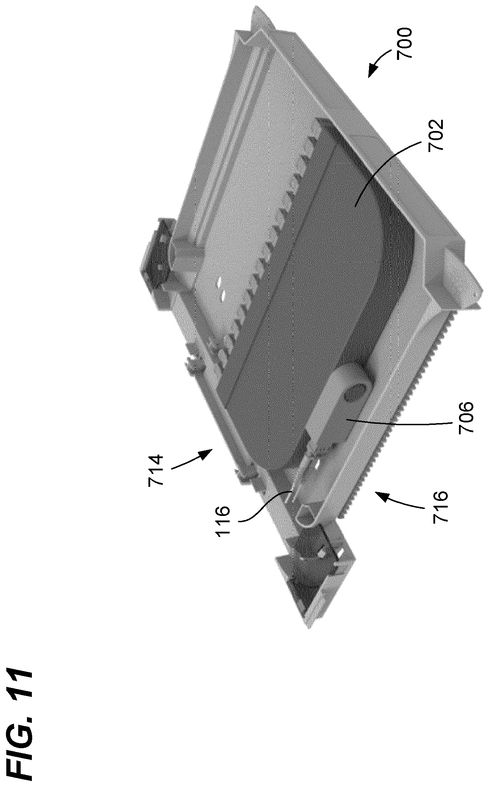

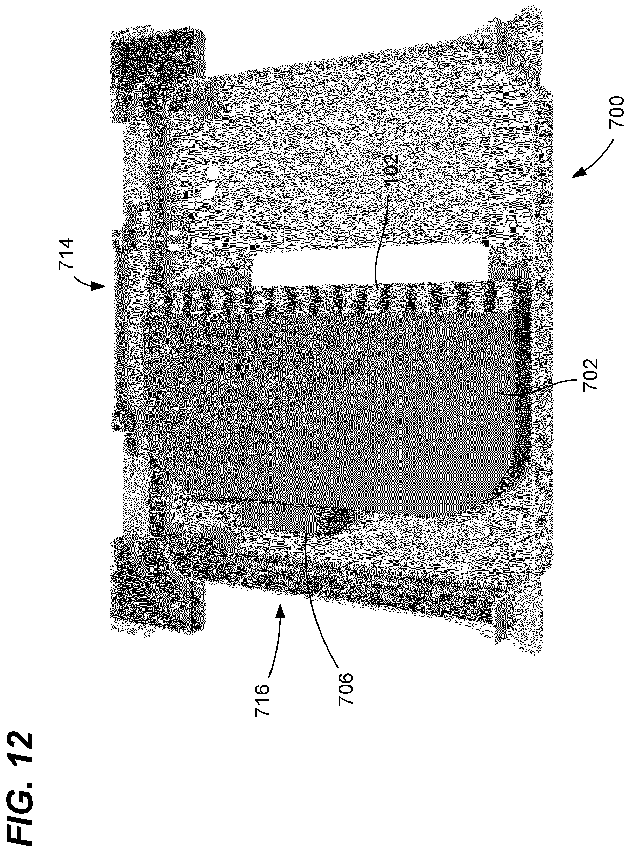

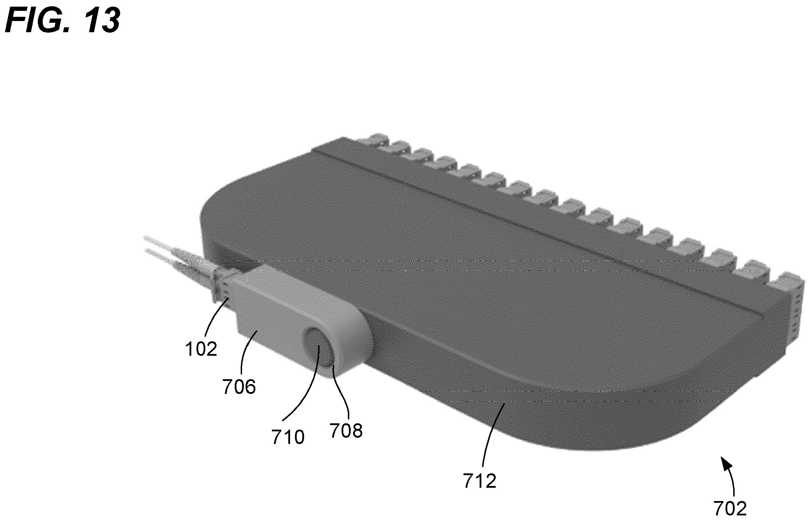

Now referring to FIGS. 10-13, another example of an arrangement, not forming part of the claimed invention, where the signal output locations are stacked in a front-to-back direction, rather than a side-to-side direction, is illustrated. However, in contrast to the previous example arrangements, the distribution arrangement shown in FIGS. 10-13 is provided as a fiber optic distribution element 700 defining a pull-out drawer, where the fiber optic distribution element 700 directly houses a single removable telecommunications module 702 instead of pivot trays. FIG. 11 illustrates a left side perspective view of the fiber optic distribution element 700 of FIG. 10. FIG. 12 illustrates a top perspective view of the fiber optic distribution element 700 of FIG. 10. And, FIG. 13 illustrates the removable module 702 of the element 700 of FIGS. 10-12 in isolation.

As shown, the distribution element 700 and the module 702 therein are sized as a double-high module that can house two 1:32 fiber optic splitters. The signal output locations are provided by sixteen vertically arranged quad adapter blocks 103 that are stacked in a front-to-back direction, as noted above. The total sixty-four output ports allow two 1:32 splitters to output all the signals via the adapters 102 at a right side 704 of the module 702.

Still referring to FIGS. 10-13, as shown, the signal input location for the module 702 that is within the distribution element 700 is provided by pivotal adapter mount 706 that can pivot over a 180-degree travel range to allow flexibility to the input signal direction for the distribution element 700. The pivotal adapter mount 706 defines a hinge receiver 708 in the form of an opening that receives a hinge pin 710 provided on a back wall 712 of the module 700 to allow the pivotal movement. The adapter mount 706 defines a hollow interior for providing cable paths that accommodate the connectors and terminated internal cabling 116 for the signals being input into the adapter mount 706. In the example depicted in FIGS. 10-13, the pivotal adapter mount 706 is turned toward a back 714 of the element 700 for receiving the input cabling 116 from the back 714 of the element 700 and adjacent a left side 716.

If the distribution direction of the element 700 needs to be changed and the mounting direction of the module 702 is reversed, the pivotal adapter mount 706 can be pivoted 180 degrees to allow for a right-side input orientation.

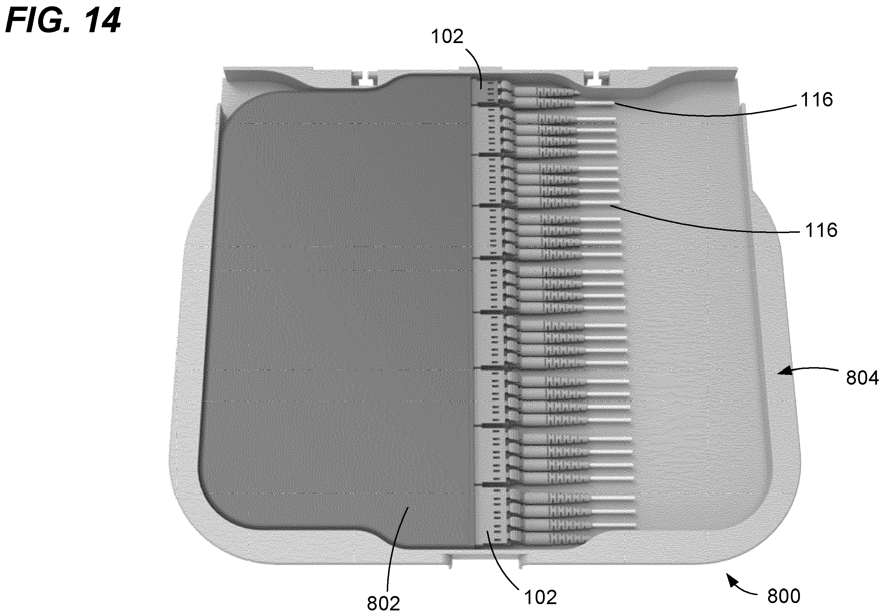

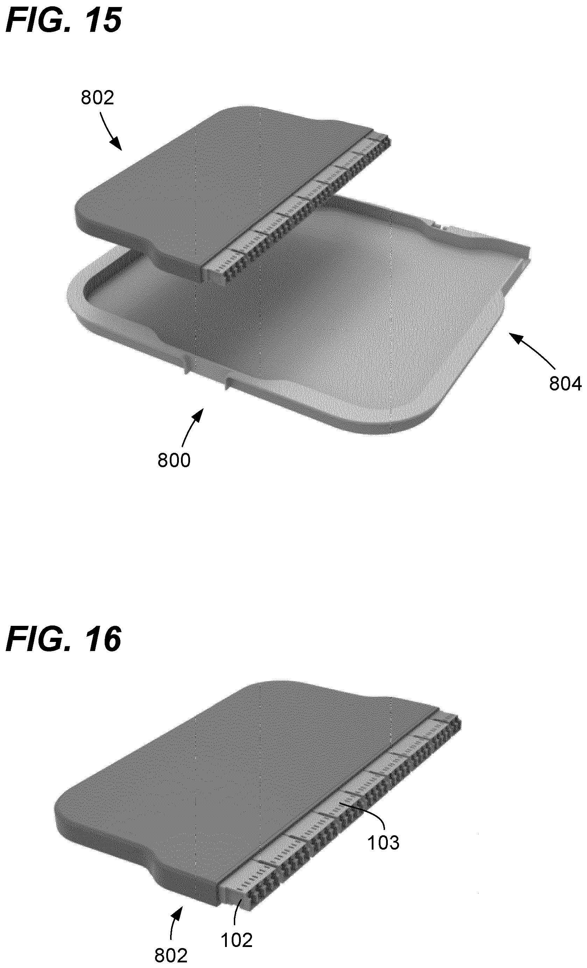

Referring now to FIGS. 14-16, another example of a telecommunications pivot tray 800 having features that are examples of inventive aspects in accordance with the present disclosure is illustrated. The tray 800 houses a removable module 802, and similar to the embodiments shown in FIGS. 8-13, not only are the output signal location are provided by adapters 102 that are stacked in a front-to-back direction, but the signal input locations are also aligned with the signal output adapters 102 in the front-to-back direction along the same stack. FIG. 15 illustrates the removable module 802 of FIG. 14 in an exploded configuration with respect to the pivot tray 800, and FIG. 16 illustrates the removable module 802 of the tray 800 of FIG. 14 in isolation. As shown in the depicted example, the pivot tray 800 is provided as a right input and output tray 800 where both input and output cables 116 enter and exit the tray 800 from a right side 804 of the tray 800. In the depicted example, the removable module 802 is sized such that the width of the module 802 expands essentially the entire length of the tray 800 in a front-to-back direction.

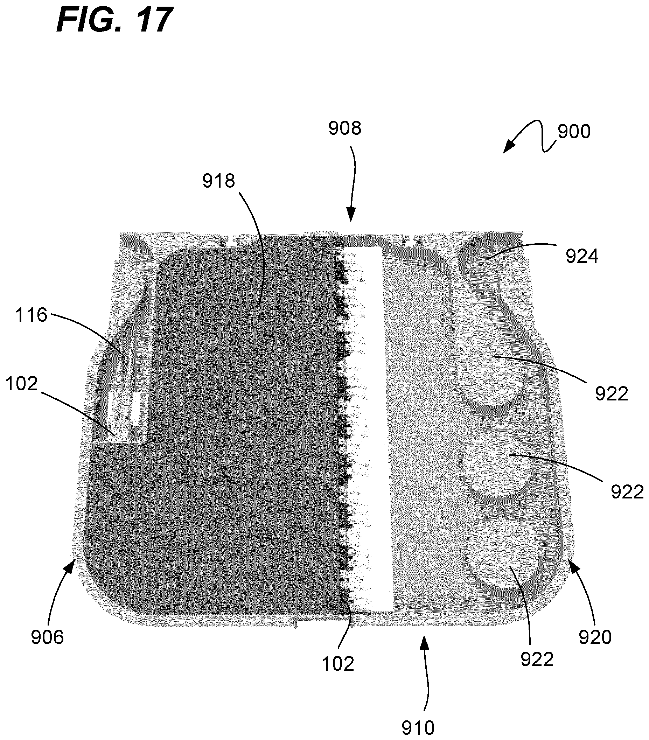

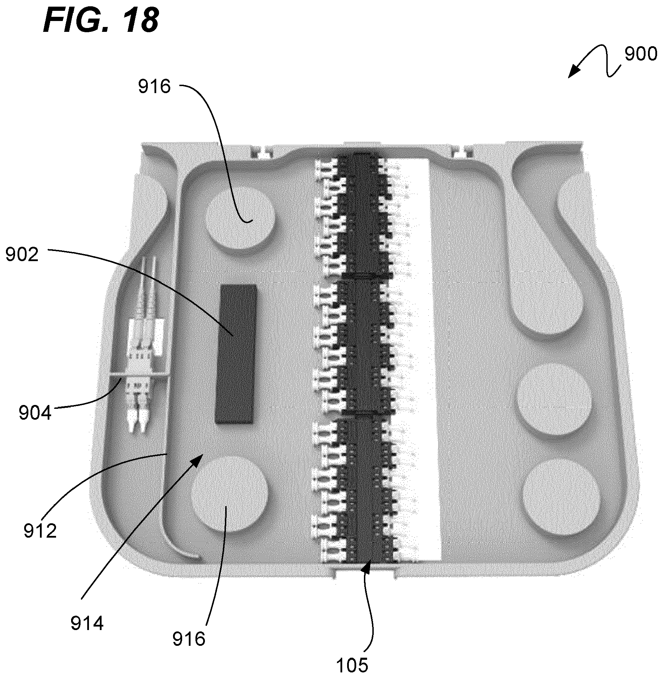

Referring now to FIGS. 17 and 18, another example of a telecommunications pivot tray 900, not forming part of the claimed invention. Unlike the trays/elements 500, 600, 700, 800 of FIGS. 8-16, the pivot tray 900 is not depicted as including a separate removable module that houses the fiber optic splitter and the adapters 102 that define the connection locations. As shown, a fiber optic splitter 902 is mounted to a splitter mount that is formed integrally with the pivot tray 900. However, similar to the trays/elements 500, 600, 700, 800 of FIGS. 8-16, the output signal locations are provided by adapters 102 that are stacked in a front-to-back direction. In the depicted example, the adapters 102 are provided in the form of staggered adapter blocks 105 that are formed from twelve LC adapters 102 each. Thus, the pivot tray 900 provides four extra ports when housing a 1:32 fiber optic splitter 902 to add flexibility to the distribution configurations that may be possible within the tray 900.

It should be noted that the adapter blocks 105 that are usable on the depicted pivot tray 900 are shown and described in further detail in U.S. Patent No. 9,075,203.

The signal input location is defined by a duplex adapter 102 that is mounted on an adapter wall 904 adjacent a left side 906 of the pivot tray 900 and incoming connectorized cables 116 enter the tray at a rear 908, left side 906 of the tray 900. Once they are coupled with the input adapter 102, they are lead toward a front 910 of the pivot tray 900 and around a separator wall 912 to the fiber optic splitter 902 in a splitter area 914 for a power split of the signal.

Within the splitter area 914, the splitter mount is flanked by two radius limiters 916 in the form of spools for managing or spooling any slack cable. A cover 918 is used to enclose the splitter area 914 and to retain any spooled cabling 116. FIG. 18 illustrates the pivot tray 900 of FIG. 17 with the cover 918 removed from the tray 900 to show the internal details of the splitter area 914.

From the output adapter blocks 105, the connectorized cables 116 are lead out an exit located adjacent the rear 908, at a right side 920 of the pivot tray 900, after being routed around cable management structures 922 in the form of spools. A cable path 924 is defined from the spools 922 to the exit for guiding the output cables 116.

It should be noted that although the fiber optic adapters 102 and adapter blocks 103/105 depicted in the present application are LC format adapters, the elements/trays/modules of the present application may be modified to use other formats of adapters such as SC or MPO.

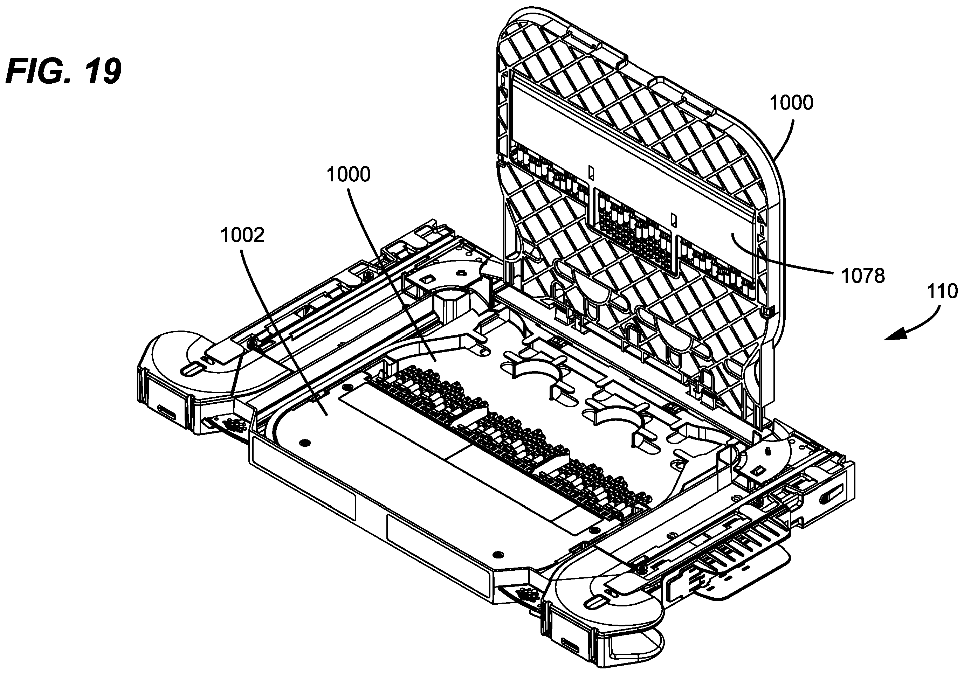

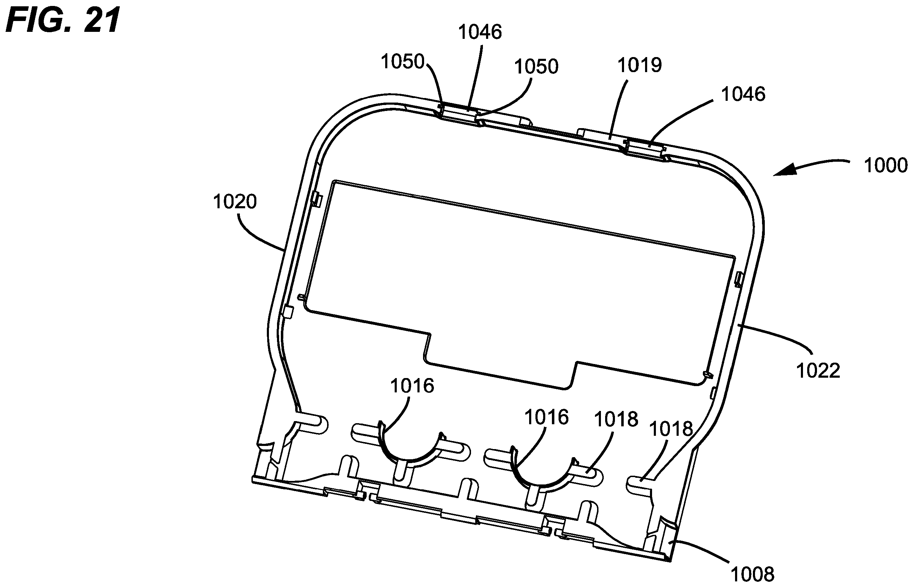

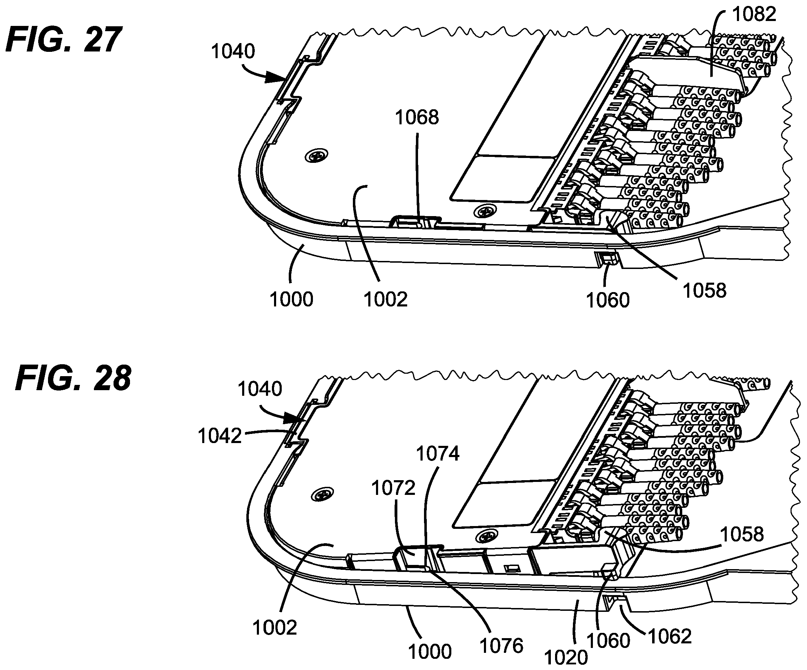

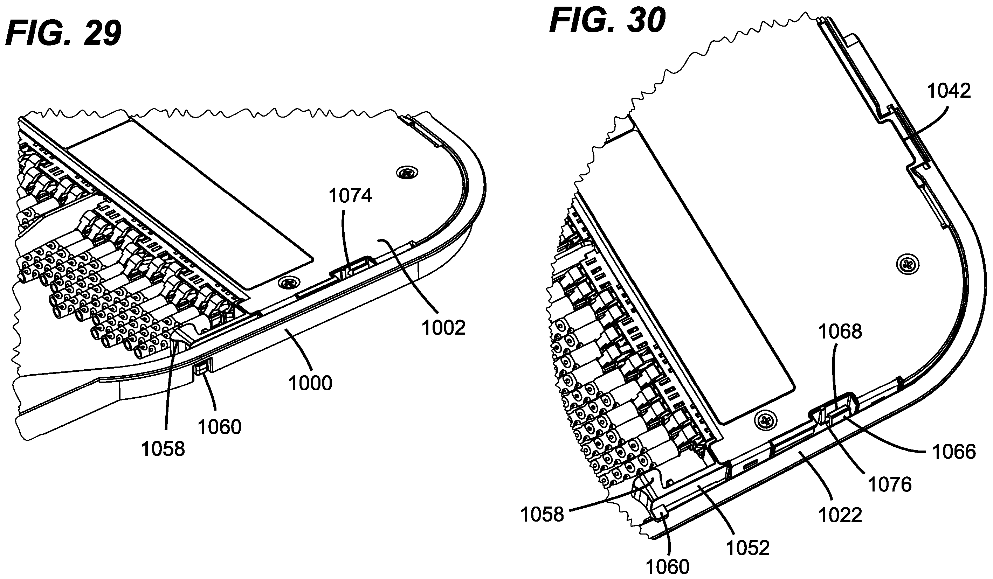

FIGS. 19-35 illustrate another example of a telecommunications pivot tray 1000 having features that are examples of inventive aspects in accordance with the present disclosure. Similar to the trays 300, 400, 500, 600, 800 of FIGS. 6-9, 14-16 the pivot tray 1000 is depicted as including a separate, removable module 1002 that houses a fiber optic splitter 1004 and the adapters 102 that define the connection locations, as will be discussed in further detail below.

In FIG. 19, a pair of the pivot trays 1000 are shown as mounted within a fiber optic distribution element 110 that defines a pull-out drawer. As noted above, examples of such slidable distribution elements 110 that can support the trays discussed herein, including the movement and functionality of the distribution elements 110, are described in PCT Publication Nos. WO 2014/118227; WO 2014/207210; and WO 2016/012550. reference. As noted above, such a distribution element 110 and pivot tray arrangement is configured to allow the same tray(s) 1000 to be used for both left and right orientation for signal input and output purposes.

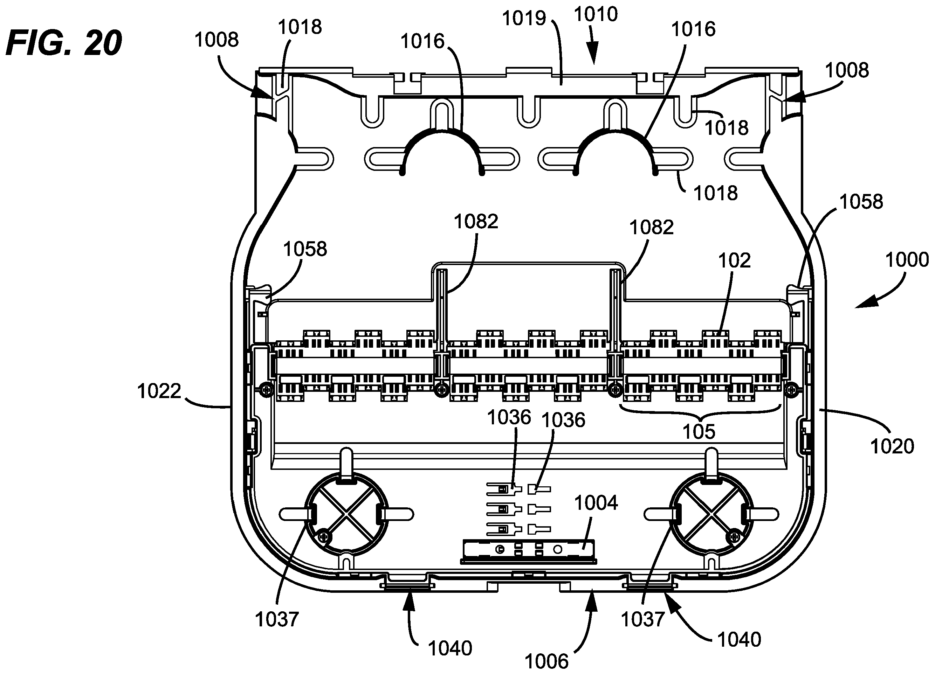

As shown in FIGS. 19 and 20, each pivot tray 1000 houses the removable telecommunications module 1002 toward a front side 1006 of the tray 1000. Cable entry/exit passages 1008 are provided adjacent the rear 1010 of the tray 1000 on both a right side 1012 and a left side 1014 of the pivot tray 1000. Extending across the pivot tray 1000, adjacent the rear 1010 of the tray 1000, are a series of cable management structures 1016 in the form of half-spools that are configured to guide cabling with bend radius protection toward and away from the adapters 102 of the telecommunications module 1002 located toward the front 1006 of the pivot tray 1000. The spools 1016 define a plurality of cable management fingers 1018 around their perimeters that cooperate with cable management fingers 1018 that extend from a rear wall 1019 of the pivot tray 1000 and also cable management fingers 1018 that extend from right and left walls 1020, 1022 of the pivot tray 1000 for keeping cables retained adjacent the back side 1010 of the pivot tray 1000.

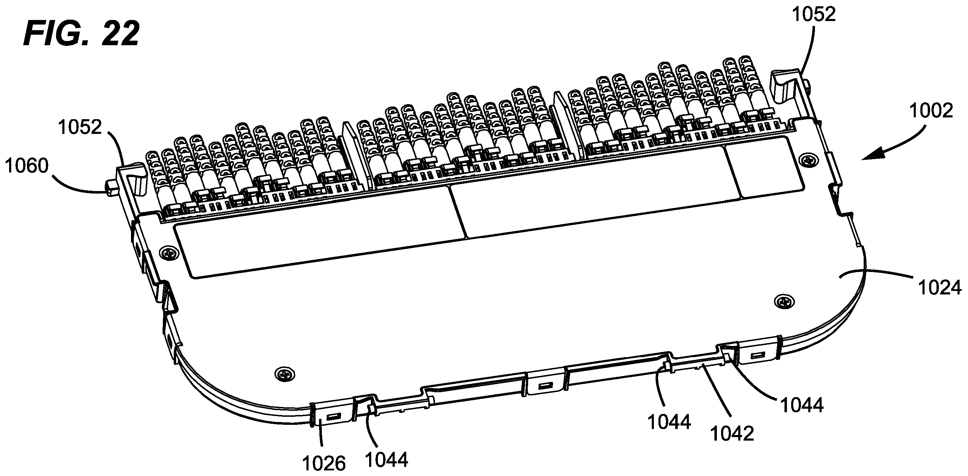

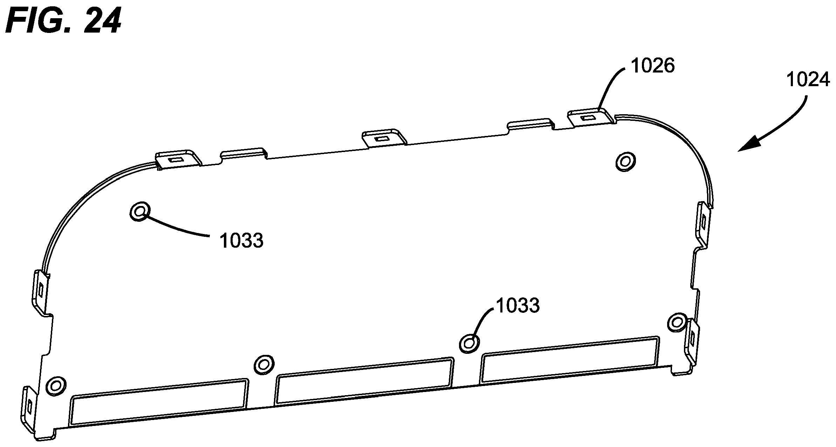

Referring now to FIGS. 22-24, as shown, the module 1002 may include a snap-fit cover 1024. The cover 1024 is shown in isolation in FIG. 24. As shown, cover 1024 may define downwardly extending snap tabs 1026 that are configured to cooperate with snap hooks 1028 provided around the periphery of a module main body 1030. The snap hooks 1028 may be provided at notched portions 1032 around the periphery of the module main body 1030 such that when the cover 1024 is snap-fit onto the module 1002, the snap tabs 1026 lie flush against the sidewalls of the module main body 1030 to retain the width and length of the module 1002. The cover 1024 is depicted as also including fastener openings 1033 that cooperate with bosses 1035 provided within the module main body 1030 for fastening the cover 1024 down to the module 1002.

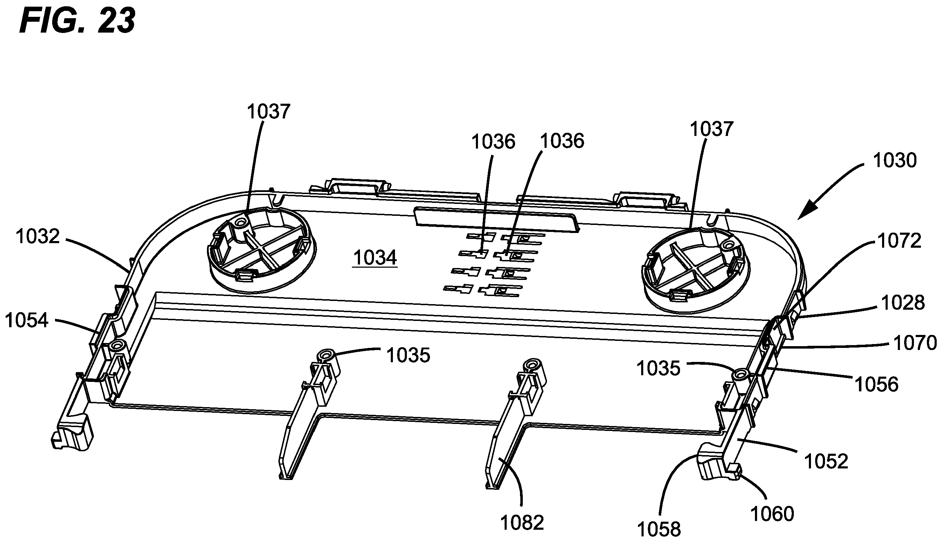

The module main body 1030 is shown in isolation in FIG. 23. In FIG. 23, the module 1002 is shown with the cover 1024 removed to illustrate the internal features thereof. The module 1002 is shown in an empty configuration with the front adapters 102 and the fiber optic equipment (e.g., optical splitter(s)) removed therefrom.

As shown, the module 1002 defines a splitter area 1034 flanked by two radius limiters 1037 in the form of spools for providing flexibility in cable spooling and management within the module 1002. The splitter area 1034 is depicted as including dovetail-shaped mounting slots 1036 for slidable mounting of fiber optic splitters 1004 (shown in FIG. 20). It should be noted that other types of mounting structures may be used for mounting fiber optic splitters 1004 within the splitter area 1034, and that the dovetail-shaped openings/slots 1036 for sliding and snap-fitting the splitters 1004 is simply one example of mounting structures that can be used within the module 1002.

And, similar to the modules discussed above, the signal input/output locations maybe provided by adapters 102 that are stacked widthwise along a front 1038 of the module 1002. Similar to that discussed above, in the depicted example, the adapters 102 are provided in the form of staggered adapter blocks 105 that are formed from twelve LC adapters 102 each. Thus, the module 1002 provides four extra ports when housing a 1:32 fiber optic splitter 1004 within the module 1002 to add flexibility to the distribution configurations that may be possible, as will be described further below. The adapter blocks 105 that are usable on the depicted module 1002 and the mounting features thereof are shown and described in further detail in U.S. Patent No. 9,075,203.

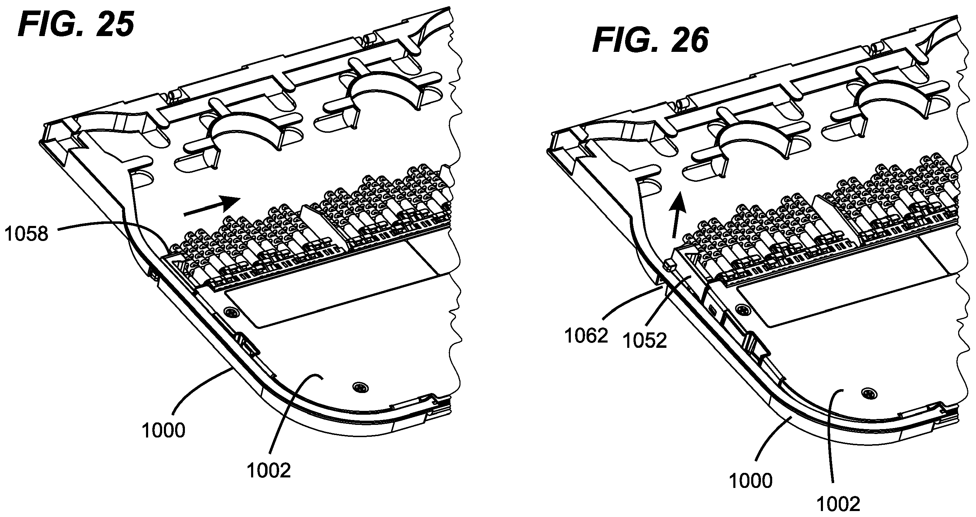

Referring now to FIGS. 25-31, similar to the pivot trays 300 and 400 and to the module 302, the pivot tray 1000 and the module 1002 removably housed therein are configured so as to provide some flexibility for accessing and cleaning the adapters 102 that are mounted to the module 1002. In the shown example, the tray 1000 and the module 1002 are structured such that the module 1002 can pivot via a hinged arrangement 1040 adjacent the front 1006 of the tray(s) 1000. With such a configuration, the module 1002 may be tilted up generally from inside the pivot tray 1000 so as to lift the adapters 102 within the tray 1000, while the opposite end of the module 1002 remains hinged at the front end 1006 of the tray 1000. In this manner, the need for shutters to minimize or prevent damage to a user's eyes may be eliminated since a user at the front of the distribution element would not be looking directly into the ports.

Still referring to FIGS. 25-31, further details regarding the pivotal movement of the module 1002 relative to the tray 1000 will be described herein.

In the example module 1002 shown, the module 1002 is depicted as including a pair of hinges 1042 with hinge pins 1044 positioned at the ends thereof. In the illustrated example, the hinges 1042 are configured to fit within hinge slots 1046 provided on a front wall 1048 of the pivot tray 1000, with the hinge pins 1044 fitting within hinge retainers 1050 located at the sides of the hinge slots 1046, as shown in FIGS. 20-22 and 25-30.

Aspects of the hinges 1042 and the hinge slots 1046, including aspects of the hinge pins 1044 and the hinge retainers 1050 located at the sides of the hinge slots 1046 may be similar to those discussed in U.S. Provisional Application Serial No. 63/030,003, filed May 26, 2020, entitled "TELECOMMUNICATIONS MODULE ARRANGEMENTS" and having Attorney Docket No. 02316,7940USP2.

After the hinge pins 1044 have been positioned within the hinge retainers 1050, as shown in FIGS. 20-22 and 25-30, the module 1002 can be pivoted all the way down to a horizontal flat position within the pivot tray 1000. As noted in U.S. Provisional Application Serial No. 63/030,003, the profile of the hinge pins 1044 and the hinge retainers 1050 may allow a locking function for the module 1002 when the module 1002 is inserted and pivoted down from a vertical position during initial coupling of the module 1002 to the pivot tray 1000.

Still referring to FIGS. 25-31, the module 1002 and the tray 1000 include certain features for allowing the pivotal tilting of the module 1002 for cleaning access and for providing limits to the pivotable movement of the module 1002.

As shown, the module 1002 includes a flexible cantilever arm 1052 extending forwardly from each of the right and left walls 1054, 1056 of the module 1002. The flexible arm 1052 defines a finger grip portion 1058 and a retention tab 1060 on an opposite side from the finger grip portion 1058. The retention tab 1060 is configured to cooperate with a cutout 1062 on each of the right and left walls 1020, 1022 of the tray 1000 for locking the module 1002 in the flat position. The flexible arm 1052 can be elastically bent inwardly toward the adapters 102 using the grip portion 1058 until the retention tab 1060 clears the cutout 1062, at which point, the module 1002 can be tilted upwardly.

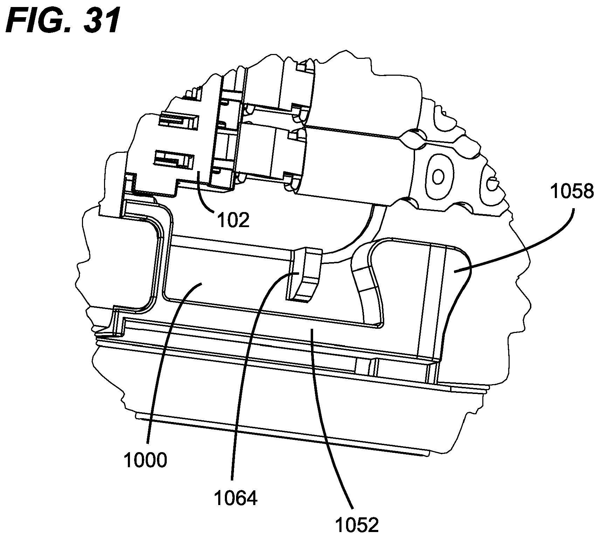

As shown in FIG. 31, an overbend protection structure in the form of a tab 1064 may be provided on the pivot tray 1000 adjacent the flexible arm 1052 to limit or prevent overflexing the arm 1052 past the point of elastic return.

As also shown in FIGS 25-30, the pivot tray 1000 further includes a rotation limit structure in the form of a rear flexible cantilever arm 1066. The rear cantilever arm 1066 is configured to cooperate with the tiltable module 1002 in limiting the pivotable travel of the module 1002.

The rear cantilever arm 1066 (provided adjacent each side of the pivot tray) includes a tab 1068 that protrudes inwardly for cooperating with a lip 1070 defined within a notch 1072 located at each side of the module 1002. As shown, the tab 1068 defines a ramped upper surface 1074 opposite from a flat lower surface 1076. The flat surface 1076 is configured to interact with the lip 1070 of the module 1002 to limit further upward pivotable/tiltable motion of the module 1002. The ramped surface 1074, on the other hand, allows contact with a bottom surface 1078 of the module 1002 and causes guided outward flexing of the tab 1068 when the module 1002 is initially being positioned within the tray 1000.

In certain embodiments, an overbend protection feature such as an extra protrusion may also be located at an inner side of each of the right and left walls 1020, 1022 of the pivot tray 1000 for contacting the rear flexible cantilever arm 1066 to limit or prevent overflexing of the arm 1066 past the point of elastic return. Or, in other embodiments, the position of the rear flexible cantilever arm 1066 relative to the right and left walls 1020, 1022 may be such that overbend protection is automatically provided by contact with the right and left walls 1020, 1022 themselves to limit further outward flexing of the arm 1066.

For cleaning access, the module 1002 can be pivoted upwardly after the retention tab 1060 is flexed out of the cutout 1062 on each of the right and left walls 1020, 1022 of the tray 1000. The pivotal motion stops when the flat surface 1076 of the tab 1068 of the rear cantilever arm 1066 contacts the lip 1070 of the module 1002. At this point, the retention tab 1060 is utilized to keep the module 1002 at a tilted position for access and is at a position so as to rest on the top of the right and left walls 1020, 1022 of the tray 1000.

The features of the module 1002 and the tray 1000 are configured such that in certain embodiments, the range of pivotal travel is between about 1 and 10 degrees from a flat horizontal position. In certain other embodiments, the pivotal movement is limited to between about 2 and 8 degrees from the flat horizontal position. In yet other embodiments, the range of the pivotal movement is about 5 degrees from the flat horizontal position.

The limited pivot range prevents pulling and stress on the cables that extend from the module 1002, while allowing for enough vertical upward movement for accessing the adapter ports.

When cleaning is finished and the module 1002 needs to be brought down again to a flat position, the flexible arm 1052 can be flexed inwardly until the retention tab 1060 clears the top of the right and left walls 1020, 1022 of the tray 1000 where the module 1000 can be tilted down until the retention tab 1060 once again cooperates with the cutout 1062 on the tray 1000 for locking the module 1002 in the flat position.

If the module 1002 needs to be completely removed from the pivot tray 1000, the rear flexible cantilever arm 1066 has to be elastically bent until the lip 1070 of the module 1002 clears the flat surface 1076 of the tab 1068. When the module 1002 reaches a vertical position within the tray 1000, the hinges 1042 can be removed from the hinge slots 1046.

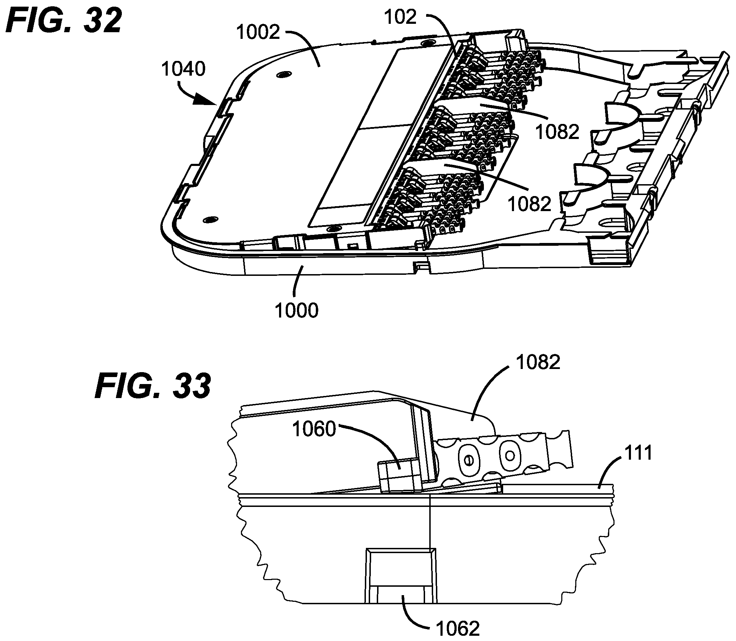

Referring now to FIGS. 32-33, another feature of the module 1002 is illustrated in further detail. As shown, the module 1002 includes abutment features in the form of bulkhead structures 1082 that are configured to limit or prevent the closure of the drawer of the distribution element 110 when the module 1002 is in a lifted position. The bulkhead structures 1082 extend forwardly from the module main body 1030 adjacent the adapters 102. The bulkhead structures 1082 are designed such that, if the drawer of the element 110 is being slidably moved to a closed position when the module 1002 is still in a tilted position, the bulkhead structures 1082 prevent closure of the drawer of the element 110 by contacting a top cover or plate 111 defined by a frame of the distribution element 110. The angling of the tilted module 1002 and the positioning of the bulkhead structures 1082 are such that contact with the bulkhead structures 1082 occurs before the connectors that are in the adapters 102 can contact the top cover or plate 111 to prevent damage to the connections of the module 1002. In FIG. 20, a top view of the pivot tray 1000 illustrates the abutment bulkhead structures 1082 positioned between the adapter blocks 105.

Even though the hinge location being provided adjacent the front 1006 of the pivot trays 1000 provides a certain amount of protection against inadvertent closing of the drawer when the modules 1002 are in a cleaning position and causing damage or breakage to the modules 1002, the bulkhead structures 1082 provide even further protection against contact with the top plate 111 of the distribution element 110 for pinching of cabling.

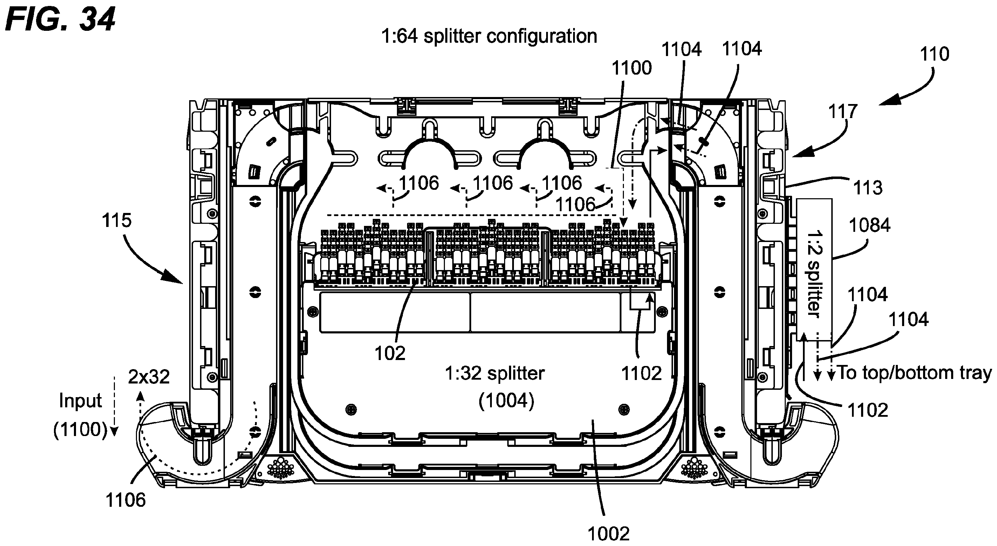

Referring now to FIGS. 34-35, one example distribution system utilizing the telecommunications modules 1002 is illustrated. The distribution system is depicted as utilizing the modules 1002 discussed above within the distribution element 110 and an additional 1:2 splitter 1084 that is mounted to an exterior wall 113 of the element 110. The 1:2 splitter 1084 may be used in cooperation with the internal splitters 1004 (e.g., 1:32 splitters) within the modules 1002 on the pivot trays 1000 for an operational advantage.

For example, when the user traffic is low/normal, an operator can use a 1:64 split on one PON fiber since the signal strength can be supported by such a split. If the traffic load increases, the split ratio can be reduced from 1:64 to 1:32 by removing the 1:2 splitter 1084 that is mounted on the side of the distribution element 110.

A physical implementation of this concept has been shown in FIG. 34. An input signal 1100 enters the left side 115 of the element 110 and is routed to one of the connections locations defined by the adapters 102 of the module 1002. From that connection location, an internal patch 1102 may be used to route that signal out of the element 110 at an opposite right side 117 to the 1:2 splitter 1084 at the exterior of the element 110. The 1:2 splitter 1084 splits the signal, and output signals 1104 are directed to upper and lower trays 1000 positioned within the distribution element 110 as shown. The signals 1104 entering the modules 1002 positioned at the upper and lower trays 1000 can then be power-split by the 1:32 internal splitters 1004 within the modules 1002. Each of the upper and lower trays 1000 then would output a 1:32 split signal 1106 once again from the left side 115 of the distribution element 110 for a 1:64 split configuration.

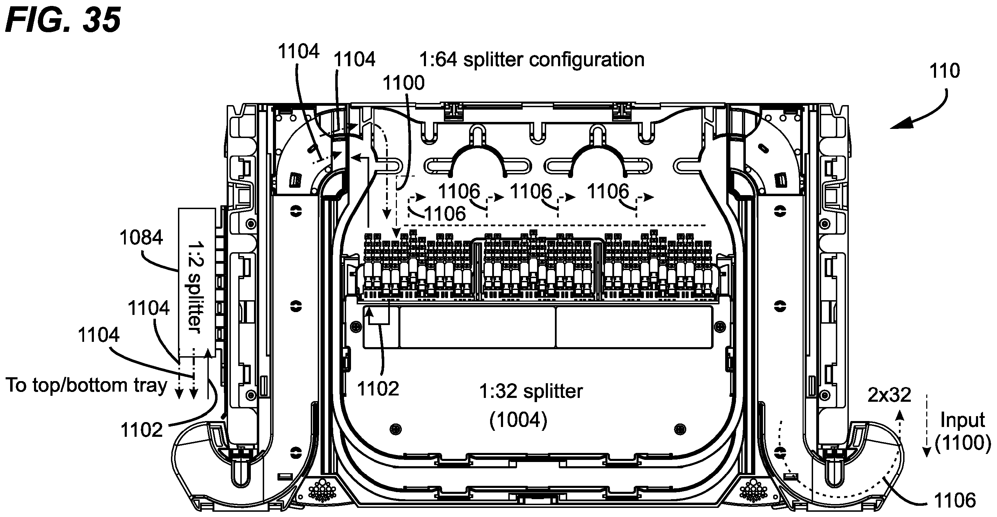

FIG. 35 illustrates the same distribution arrangement as shown in FIG. 34 but from the opposite right side 117 of the distribution element 110.

As noted above, if the traffic load increases, the split ratio can be reduced from 1:64 to 1:32 by removing the 1:2 splitter 1084 that is mounted on the side of the distribution element 110. Each tray 1000 would then simply receive a separate input signal that can be power-split by the internal 1:32 splitter 1004 within the module 1002 in each tray 1000 without a further split of the signal by a 1:2 splitter 1084 that is external to the element 110, as shown in the arrangement of FIGS. 34 and 35.

Having described the preferred aspects and implementations of the present disclosure, modifications and equivalents of the disclosed concepts may readily occur to one skilled in the art.

## Claims

1. A rack-mountable telecommunications fixture (110) including a slidable drawer for slidable movement between an open position and a closed position, the telecommunications fixture (110) comprising:
a tray (100/200/300/400/500/600/800/900/1000/1100) configured for mounting to the telecommunications fixture (110), the tray (100/200/300/400/500/600/800/900/1000/1100) including a pivot hinge positioned adjacent a rear end of the tray (100/200/300/400/500/600/800/900/1000/1100) that pivotally mounts the tray (100/200/300/400/500/600/800/900/1000/1100) to the telecommunications fixture (110)
a fiber optic splitter (902/1004) positioned within the tray (100/200/300/400/500/600/800/900/1000/1100) for power splitting an input signal into a plurality of output signals each output signal being the same signal as the split input signal; and
a plurality of fiber optic adapters (102) provided in a stacked arrangement within the tray (100/200/300/400/500/600/800/900/1000/1100), at least some of the adapters (102) defining signal output locations that output the output signals via cables that are connectorized and coupled to the fiber optic adapters (102), wherein the tray (100/200/300/400/500/600/800/900/1000/1100) defines a first cable path that leads at least one cable carrying the input signal to the fiber optic splitter (902/1004) and a second cable path that leads a plurality of cables carrying the output signals from the adapters (102) to an exit point in the tray (100/200/300/400/500/600/800/900/1000/1100);
**characterized in that** the fiber optic splitter (902/1004) and the plurality of fiber optic adapters (102) provided in a stacked arrangement are positioned within a telecommunications module (302, 502, 602, 802, 1002) movably mounted to the tray (100/200/300/400/500/600/800/900/1000/1100), wherein the telecommunications module (302, 502, 602, 802, 1002) is hinged adjacent a front end of tray so as to be tiltable for lifting the fiber optic adapters (102),
wherein the telecommunications module (302, 502, 602, 802, 1002) within the tray (100/200/300/400/500/600/800/900/1000/1100) defines at least one abutment structure (1082) that is configured to abut a a portion of the telecommunications fixture (110) before the fixture (110) contacts the fiber optic adapters (102) within the telecommunications tray (100/200/300/400/500/600/800/900/1000/1100) to prevent movement of the slidable drawer from the open position to the closed position.

2. The telecommunications fixture (110) according to claim 1, wherein the telecommunications module (302, 502, 602, 802, 1002) is removably mounted to the tray (100/200/300/400/500/600/800/900/1000/1100).

3. The telecommunications fixture (110) according to claim 1, wherein the module (302, 502, 602, 802, 1002) defines an input fiber optic adapter (102) for receiving connectorized cabling carrying the input signal, the input fiber optic adapter (102) having ports positioned perpendicular to ports of the adapters (102) defining the signal output locations.

4. The telecommunications fixture (110) according to claim 1, wherein the first cable path and the second cable path include overlapping portions.

5. The telecommunications fixture (110) according to claim 1, wherein the first cable path and the second cable path are the same path.

6. The telecommunications fixture (110) according to claim 1, wherein the plurality of fiber optic adapters (102) are stacked along a direction parallel to a pivot axis defined by the tray (100/200/300/400/500/600/800/900/1000/1100).

7. The telecommunications fixture (110) according to claim 1, wherein the plurality of fiber optic adapters (102) are stacked along a direction perpendicular to a pivot axis defined by the tray (100/200/300/400/500/600/800/900/1000/1100).

8. The telecommunications fixture (110) according to claim 1, wherein at least one of the first cable path and the second cable path defines a radius limiter (124/140/312/318/508/516/916/1037) to control bending of fiber optic cabling.

9. The telecommunications fixture (110) according to claim 1, wherein at least one of the first cable path and the second cable path defines cable management fingers (128/142/1018) for retaining cabling within the cable path.

10. The telecommunications fixture (110) according to claim 1, wherein the fiber optic splitter (902/1004) is a 1:32 splitter.

11. The telecommunications fixture (110) according to claim 1, wherein the fiber optic splitter (902/1004) is located in a splitter area (134/314/512/914/1034) at least partially isolated from the plurality of adapters (102) by a wall.

12. The telecommunications fixture (110) according to claim 1, wherein the tray (100/200/300/400/500/600/800/900/1000/1100) defines an input fiber optic adapter (102) for receiving connectorized cables carrying the input signal, the input fiber optic adapter (102) having ports positioned parallel to ports of the adapters (102) defining the signal output locations.

13. The telecommunications fixture (110) according to claim 1, wherein the tray (100/200/300/400/500/600/800/900/1000/1100) defines an input fiber optic adapter (102) for receiving connectorized cables carrying the input signal, the input fiber optic adapter (102) having ports parallel and generally aligned with ports of the adapters (102) defining the signal output locations.

## Patentansprüche

1. Rackmontierbare Telekommunikationshalterung (110), umfassend einen verschiebbaren
Einschub zur verschiebbaren Bewegung zwischen einer offenen Position und einer geschlossenen Position, die Telekommunikationshalterung (110) umfassend:
einen Einsatz (100/200/300/400/500/600/800/900/1000/1100), der für die Montage an der Telekommunikationshalterung (110) konfiguriert ist, wobei der Einsatz (100/200/300/400/500/600/800/900/1000/1100) ein Schwenkscharnier umfasst, das angrenzend an ein hinteres Ende des Einsatzes (100/200/300/400/500/600/800/900/1000/1100) positioniert ist und den Einsatz (100/200/300/400/500/600/800/900/1000/1100) schwenkbar an der Telekommunikationshalterung (110) lagert,
einen faseroptischen Splitter (902/1004), der innerhalb des Einsatzes (100/200/300/400/500/600/800/900/1000/1100) positioniert ist, um ein Eingangssignal in eine Vielzahl von Ausgangssignalen aufzuteilen, wobei jedes Ausgangssignal das gleiche Signal wie das aufgeteilte Eingangssignal ist; und
eine Vielzahl von Glasfaseradaptern (102), die in einer gestapelten Anordnung innerhalb des Einsatzes (100/200/300/400/500/600/800/900/1000/1100) bereitgestellt sind, wobei mindestens einige der Adapter (102) Signalausgabeorte definieren, die die Ausgangssignale über Kabel ausgeben, die steckverbinderkonfektioniert sind und an die Glasfaseradapter (102) gekoppelt sind, wobei der Einsatz (100/200/300/400/500/600/800/900/1000/1100) einen ersten Kabelweg definiert, der mindestens ein das Eingangssignal führendes Kabel zu dem faseroptischen Splitter (902/1004) führt, und einen zweiten Kabelweg, der eine Vielzahl von die Ausgangssignale führenden Kabeln von den Adaptern (102) zu einem Austrittspunkt in dem Einsatz (100/200/300/400/500/600/800/900/1000/1100) führt;
**dadurch gekennzeichnet, dass**
der faseroptische Splitter (902/1004) und die Vielzahl von Glasfaseradaptern (102), die in einer gestapelten Anordnung bereitgestellt sind, innerhalb eines Telekommunikationsmoduls (302, 502, 602, 802, 1002) positioniert sind, das beweglich an dem Einsatz (100/200/300/400/500/600/800/900/1000/1100) angebracht ist, wobei das Telekommunikationsmodul (302, 502, 602, 802, 1002) angrenzend an ein vorderes Ende des Einsatzes angelenkt ist, um kippbar zum Anheben der Glasfaseradapter (102) zu sein,
wobei das Telekommunikationsmodul (302, 502, 602, 802, 1002) innerhalb des Einsatzes (100/200/300/400/500/600/800/900/1000/1100) mindestens eine Anschlagstruktur (1082) definiert, die so konfiguriert ist, dass sie an einen Abschnitt der Telekommunikationshalterung (110) anstößt, bevor die Halterung (110) die Glasfaseradapter (102) innerhalb der Telekommunikationshalterung (100/200/300/400/500/600/800/900/1000/1100) kontaktiert, um eine Bewegung des verschiebbaren Einsatzes von der offenen Position zur geschlossenen Position zu verhindern.

2. Telekommunikationshalterung (110) nach Anspruch 1, wobei das Telekommunikationsmodul (302, 502, 602, 802, 1002) abnehmbar an dem Einsatz (100/200/300/400/500/600/800/900/1000/1100) angebracht ist.

3. Telekommunikationshalterung (110) nach Anspruch 1, wobei das Modul (302, 502, 602, 802, 1002) einen Eingangs-Glasfaseradapter (102) zum Empfangen einer steckverbinderkonfektionierten Verkabelung definiert, die das Eingangssignal trägt, wobei der Eingangs-Glasfaseradapter (102) Anschlüsse aufweist, die senkrecht zu Anschlüssen der Adapter (102) positioniert sind, die die Signalausgangsstellen definieren.

4. Telekommunikationshalterung (110) nach Anspruch 1, wobei der erste Kabelweg und der zweite Kabelweg überlappende Abschnitte aufweisen.

5. Telekommunikationshalterung (110) nach Anspruch 1, wobei der erste Kabelweg und der zweite Kabelweg der gleiche Weg sind.

6. Telekommunikationshalterung (110) nach Anspruch 1, wobei die Vielzahl von Glasfaseradaptern (102) entlang einer Richtung parallel zu einer durch den Einsatz (100/200/300/400/500/600/800/900/1000/1100) definierten Schwenkachse gestapelt ist.

7. Telekommunikationshalterung (110) nach Anspruch 1, wobei die Vielzahl von Glasfaseradaptern (102) entlang einer Richtung senkrecht zu einer durch den Einsatz (100/200/300/400/500/600/800/900/1000/1100) definierten Schwenkachse gestapelt ist.

8. Telekommunikationshalterung (110) nach Anspruch 1, wobei mindestens einer von dem ersten Kabelweg und dem zweiten Kabelweg einen Radiusbegrenzer (124/140/312/318/508/516/916/1037) definiert, um das Biegen der faseroptischen Verkabelung zu steuern.

9. Telekommunikationshalterung (110) nach Anspruch 1, wobei mindestens einer von dem ersten Kabelweg und dem zweiten Kabelweg Kabelverwaltungsfinger (128/142/1018) definiert, um eine Verkabelung innerhalb des Kabelwegs zu halten.

10. Telekommunikationshalterung (110) nach Anspruch 1, wobei der faseroptische Splitter (902/1004) ein 1:32-Splitter ist.

11. Telekommunikationshalterung (110) nach Anspruch 1, wobei der faseroptische Splitter (902/1004) in einem Splitterbereich (134/314/512/914/1034) angeordnet ist, der zumindest teilweise von der Vielzahl von Adaptern (102) durch eine Wand isoliert ist.

12. Telekommunikationshalterung (110) nach Anspruch 1, wobei der Einsatz (100/200/300/400/500/600/800/900/1000/1100) einen Eingangs-Glasfaseradapter (102) zum Empfangen von steckverbinderkonfektionierten Kabeln definiert, die das Eingangssignal tragen, wobei der Eingangs-Glasfaseradapter (102) Anschlüsse aufweist, die parallel zu Anschlüssen der Adapter (102) positioniert sind, die die Signalausgangsstellen definieren.

13. Telekommunikationshalterung (110) nach Anspruch 1, wobei der Einsatz (100/200/300/400/500/600/800/900/1000/1100) einen Eingangs-Glasfaseradapter (102) zum Empfangen von steckverbinderkonfektionierten Kabeln definiert, die das Eingangssignal tragen, wobei der Eingangs-Glasfaseradapter (102) Anschlüsse aufweist, die parallel und im Allgemeinen mit Anschlüssen der Adapter (102) ausgerichtet sind, die die Signalausgangspositionen definieren.

## Revendications

1. Accessoire de télécommunications (110) pouvant être monté en baie comportant un tiroir coulissant pour un mouvement coulissant entre une position ouverte et une position fermée, l'accessoire de télécommunications (110) comprenant :
un plateau (100/200/300/400/500/600/800/900/1000/1100) configuré pour être monté sur l'accessoire de télécommunications (110), le plateau (100/200/300/400/500/600/800/900/1000/1100) comportant une charnière à pivot positionnée de manière adjacente à une extrémité arrière du plateau (100/200/300/400/500/600/800/900/1000/1100) qui monte de manière pivotante le plateau (100/200/300/400/500/600/800/900/1000/1100) sur l'accessoire de télécommunications (110)
un diviseur de fibre optique (902/1004) positionné au sein du plateau (100/200/300/400/500/600/800/900/1000/1100) pour diviser en puissance un signal d'entrée en une pluralité de signaux de sortie, chaque signal de sortie étant le même signal que le signal d'entrée divisé ; et
une pluralité d'adaptateurs de fibre optique (102) fournis dans un agencement empilé au sein du plateau (100/200/300/400/500/600/800/900/1000/1100), au moins certains des adaptateurs (102) définissant des emplacements de sortie de signal qui fournissent en sortie les signaux de sortie via des câbles qui sont rendus connectables et couplés aux adaptateurs de fibre optique (102), dans lequel le plateau (100/200/300/400/500/600/800/900/1000/1100) définit un premier trajet de câble qui conduit au moins un câble transportant le signal d'entrée vers le diviseur de fibre optique (902/1004) et un deuxième trajet de câble qui conduit une pluralité de câbles transportant les signaux de sortie depuis les adaptateurs (102) vers un point de sortie dans le plateau (100/200/300/400/500/600/800/900/1000/1100) ;
**caractérisé en ce que**
le diviseur de fibre optique (902/1004) et la pluralité d'adaptateurs de fibre optique (102) fournis dans un agencement empilé sont positionnés au sein d'un module de télécommunications (302, 502, 602, 802, 1002) monté de manière mobile sur le plateau (100/200/300/400/500/600/800/900/1000/1100), dans lequel le module de télécommunications (302, 502, 602, 802, 1002) est articulé de manière adjacente à une extrémité avant du plateau de manière à pouvoir être basculé pour soulever les adaptateurs de fibre optique (102),
dans lequel le module de télécommunications (302, 502, 602, 802, 1002) au sein du plateau (100/200/300/400/500/600/800/900/1000/1100) définit au moins une structure de butée (1082) qui est configurée pour buter contre une portion de l'accessoire de télécommunications (110) avant que l'accessoire (110) n'entre en contact avec les adaptateurs de fibre optique (102) au sein du plateau de télécommunications (100/200/300/400/500/600/800/900/1000/1100) afin d'empêcher le mouvement du tiroir coulissant de la position ouverte jusqu'à la position fermée.

2. Accessoire de télécommunications (110) selon la revendication 1, dans lequel le module de télécommunications (302, 502, 602, 802, 1002) est monté de manière amovible sur le plateau (100/200/300/400/500/600/800/900/1000/1100).

3. Accessoire de télécommunications (110) selon la revendication 1, dans lequel le module (302, 502, 602, 802, 1002) définit un adaptateur de fibre optique d'entrée (102) destiné à recevoir un câblage rendu connectable transportant le signal d'entrée, l'adaptateur de fibre optique d'entrée (102) ayant des ports positionnés perpendiculairement aux ports des adaptateurs (102) définissant les emplacements de sortie de signal.

4. Accessoire de télécommunications (110) selon la revendication 1, dans lequel le premier trajet de câble et le deuxième trajet de câble comportent des portions se chevauchant.

5. Accessoire de télécommunications (110) selon la revendication 1, dans lequel le premier trajet de câble et le deuxième trajet de câble sont le même trajet.

6. Accessoire de télécommunications (110) selon la revendication 1, dans lequel la pluralité d'adaptateurs de fibre optique (102) sont empilés le long d'une direction parallèle à un axe de pivotement défini par le plateau (100/200/300/400/500/600/800/900/1000/1100).

7. Accessoire de télécommunications (110) selon la revendication 1, dans lequel la pluralité d'adaptateurs de fibre optique (102) sont empilés le long d'une direction perpendiculaire à un axe de pivotement défini par le plateau (100/200/300/400/500/600/800/900/1000/1100).

8. Accessoire de télécommunications (110) selon la revendication 1, dans lequel au moins l'un parmi le premier trajet de câble et le deuxième trajet de câble définit un limiteur de rayon (124/140/312/318/508/516/916/1037) pour commander la flexion du câblage de fibre optique.

9. Accessoire de télécommunications (110) selon la revendication 1, dans lequel au moins l'un parmi le premier trajet de câble et le deuxième trajet de câble définit des doigts de gestion de câble (128/142/1018) destinés à retenir le câblage au sein du trajet de câble.

10. Accessoire de télécommunications (110) selon la revendication 1, dans lequel le diviseur de fibre optique (902/1004) est un diviseur 1:32.

11. Accessoire de télécommunications (110) selon la revendication 1, dans lequel le diviseur de fibre optique (902/1004) est situé dans une zone de diviseur (134/314/512/914/1034) au moins partiellement isolée de la pluralité d'adaptateurs (102) par une paroi.

12. Accessoire de télécommunications (110) selon la revendication 1, dans lequel le plateau (100/200/300/400/500/600/800/900/1000/1100) définit un adaptateur de fibre optique d'entrée (102) destiné à recevoir des câbles rendus connectables transportant le signal d'entrée, l'adaptateur de fibre optique d'entrée (102) ayant des ports positionnés parallèlement aux ports des adaptateurs (102) définissant les emplacements de sortie de signal.

13. Accessoire de télécommunications (110) selon la revendication 1, dans lequel le plateau (100/200/300/400/500/600/800/900/1000/1100) définit un adaptateur de fibre optique d'entrée (102) destiné à recevoir des câbles rendus connectables transportant le signal d'entrée, l'adaptateur de fibre optique d'entrée (102) ayant des ports parallèles et généralement alignés avec les ports des adaptateurs (102) définissant les emplacements de sortie de signal.
